(19) **Europäisches Patentamt European Patent Office Office européen des brevets**

(11) **EP 3 047 491 B1**

(12) **FASCICULE DE BREVET EUROPEEN**

(45) Date de publication et mention
de la délivrance du brevet:
**06.12.2017 Bulletin 2017/49**

(51) Int Cl.:
***H01B 3/56*** *(2006.01)*   ***H01B 3/16*** *(2006.01)*
***H02B 13/055*** *(2006.01)*

(21) Numéro de dépôt: **14766725.7**

(22) Date de dépôt: **17.09.2014**

(86) Numéro de dépôt international:
**PCT/EP2014/069816**

(87) Numéro de publication internationale:
**WO 2015/040069 (26.03.2015 Gazette 2015/12)**

(54) **APPAREIL ÉLECTRIQUE MOYENNE OU HAUTE TENSION À ISOLATION GAZEUSE COMPRENANT DU DIOXYDE DE CARBONE, DE L'OXYGÈNE ET DE L'HEPTAFLUOROISOBUTYRONITRILE**

GASISOLIERTES MEDIUM ODER ELEKTRISCHE HOCHSPANNUNGSVORRICHTUNG MIT KOHLENDIOXID, SAUERSTOFF UND HEPTAFLUORISOBUTYRONITRIL

GAS-INSULATED MEDIUM OR HIGH VOLTAGE ELECTRICAL APPARATUS INCLUDING CARBON DIOXIDE, OXYGEN AND HEPTAFLUOROISOBUTYRONITRILE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.09.2013 FR 1359073**

(43) Date de publication de la demande:
**27.07.2016 Bulletin 2016/30**

(73) Titulaire: **General Electric Technology GmbH 5400 Baden (CH)**

(72) Inventeurs:
• **KIEFFEL, Yannick**
  **F-38440 Saint Jean de Bournay (FR)**
• **GIRODET, Alain**
  **F-69680 Chassieu (FR)**
• **CREUSOT,Christophe**
  **F-01120 Pizay (FR)**
• **PORTE, Jacques**
  **F-69006 Lyon (FR)**

(74) Mandataire: **Cleary, Fidelma et al Global Patent Operation - Europe GE International Inc. The Ark 201 Talgarth Road Hammersmith London W6 8BJ (GB)**

(56) Documents cités:
**EP-A1- 0 128 588      WO-A1-2013/041697
FR-A- 1 265 731       FR-A1- 2 977 707
FR-A1- 2 983 340      US-A- 3 048 648
US-A1- 2008 135 817**

**Description**

**DOMAINE TECHNIQUE**

L'invention appartient au domaine de l'isolation électrique et de l'extinction des arcs électriques dans des appareils électriques moyenne ou haute tension et notamment haute tension.

Plus particulièrement, la présente invention concerne l'utilisation dans un appareil électrique haute tension d'une isolation hybride à faible impact environnemental basée sur un milieu gazeux comprenant de l'heptafluoroisobutyronitrile et un mélange de gaz neutres particulier à savoir un mélange de dioxyde de carbone et d'oxygène comme gaz d'isolation électrique et/ou d'extinction des arcs électriques.

Cette isolation à base d'un mélange de gaz ternaire peut éventuellement être combinée à une isolation solide de permittivité diélectrique faible appliquée en couche de faible ou forte épaisseur sur les pièces conductrices soumises à un champ électrique supérieur au champ de claquage du système sans isolation solide. L'épaisseur de la couche isolante étant fonction du facteur d'utilisation du champ électrique, $\eta$, défini comme le rapport du champ électrique moyen (U/d) sur le champ électrique maximal, Emax ($\eta$ = U/(Emax*d)), la couche étant épaisse pour des facteurs d'utilisation proches de 0,3 et la couche étant fine pour des facteurs d'utilisation s'approchant de 0,9.

Elle se rapporte également à un appareil électrique haute tension dans lequel l'extinction des arcs électriques est assurée par un milieu gazeux comprenant du dioxyde de carbone, de l'oxygène et de l'heptafluoroisobutyronitrile et l'isolation électrique est assurée par le même gaz éventuellement en combinaison avec une isolation solide de permittivité diélectrique faible appliquée en couche de faible ou forte épaisseur sur les pièces conductrices soumises à un champ électrique supérieur au champ de claquage du système sans isolation solide. Cet appareil électrique peut notamment être un transformateur électrique tel qu'un transformateur de puissance ou de mesure, une ligne à isolation gazeuse (ou LIG) pour le transport ou la distribution de l'électricité, un jeu de barres ou encore un appareil électrique de connexion/déconnexion (aussi appelé appareil de coupure) tel qu'un disjoncteur, un interrupteur, un combiné interrupteur-fusibles, un sectionneur, un sectionneur de mise à la terre (MALT) ou un contacteur.

**ÉTAT DE LA TECHNIQUE ANTÉRIEURE**

Dans les appareils électriques de sous-station de moyenne ou haute tension, l'isolation électrique et, le cas échéant, l'extinction d'arc électrique sont typiquement assurées par un gaz qui est confiné à l'intérieur de ces appareils.

Actuellement, le gaz le plus souvent utilisé dans ce type d'appareil est l'hexafluorure de soufre ($SF_6$). Ce gaz présente, en effet, une rigidité diélectrique relativement haute, une bonne conductivité thermique et des pertes diélectriques peu élevées. Il est chimiquement inerte et non toxique pour l'homme et les animaux et, après avoir été dissocié par un arc électrique, il se recombine rapidement et presque totalement. De plus, il est ininflammable et son prix est, encore aujourd'hui, modéré.

Toutefois, le $SF_6$ a pour inconvénient majeur de présenter un potentiel de réchauffement global (PRG ou GWP pour « Global Warming Potential ») de 22 200 (relativement au $CO_2$ sur 100 ans) et une durée de séjour dans l'atmosphère de 3 200 ans, ce qui le place parmi les gaz à fort pouvoir d'effet de serre. Le $SF_6$ a donc été inscrit par le Protocole de Kyoto (1997) sur la liste des gaz dont les émissions doivent être limitées.

Le meilleur moyen de limiter les émissions du $SF_6$ consiste à limiter l'utilisation de ce gaz, ce qui a conduit les industriels à chercher des alternatives au $SF_6$.

Les gaz dits « simples » comme l'air ou l'azote, qui n'ont pas d'impact négatif sur l'environnement, présentent une rigidité diélectrique beaucoup plus faible que celle du $SF_6$. Ainsi, par exemple, les rigidités diélectriques en tension alternative (50 Hz) de l'air et de l'azote sont sensiblement trois fois plus faibles que celle du $SF_6$.

De ce fait, l'utilisation de ces gaz simples pour l'isolation électrique et/ou l'extinction d'arc électrique dans des appareils électriques de sous-station implique d'augmenter de façon drastique le volume et/ou la pression de remplissage de ces appareils, ce qui va à l'encontre des efforts qui ont été réalisés au cours de ces dernières décennies pour développer des appareils électriques compacts, sûrs pour le personnel et à encombrement de plus en plus réduit.

Des mélanges de $SF_6$ et d'azote sont utilisés pour limiter l'impact du $SF_6$ sur l'environnement. En effet, l'ajout de $SF_6$ à hauteur de 10 à 20% volumiques permet d'améliorer significativement la rigidité diélectrique de l'azote.

Néanmoins, du fait du fort PRG du $SF_6$, le PRG de ces mélanges reste très élevé. Ainsi, par exemple, un mélange de $SF_6$ et d'azote dans un rapport volumique de 10/90 présente une rigidité diélectrique en tension alternative (50 Hz) égale à 59% de celle du $SF_6$ mais son PRG est de 8 650.

De tels mélanges ne sauraient donc être utilisés comme gaz à faible impact environnemental.

Il en est de même pour les mélanges décrits dans la demande de brevet européen publiée sous le n° 0 131 922, **[1],** et comprenant environ 60 à 99,5% molaire de $SF_6$ et environ de 0,5 à 40% molaire d'un fluorocarbone saturé et notamment choisi parmi le $C_2F_5CN$, le $CBrClF_2$ et le $c\text{-}C_4F_8$.

Les perfluorocarbones ($C_nF_{2n+2}$ et $C\text{-}C_4F_8$) présentent, d'une manière générale, des propriétés de tenue diélectrique intéressantes mais leurs PRG s'inscrivent typiquement dans une gamme allant de 5 000 à 10 000 (6 500 pour $CF_4$, 7 000 pour $C_3F_8$ et $C_4F_{10}$, 8 700 pour $C$-$C_4F_8$, 9 200 pour $C_2F_6$).

A noter que le brevet US 4 547 316, **[2],** vise à fournir un mélange gazeux isolant pour dispositifs électriques et présentant d'importantes propriétés isolantes et avec une toxicité modérée pour les hommes et animaux, comparée au $C_2F_5CN$. Ainsi, le mélange gazeux proposé comprend du $C_2F_5CN$ et un nitrite d'alkyle plus particulièrement choisi dans le groupe constitué par le nitrite de méthyle, le nitrite d'éthyle, le nitrite de propyle, le nitrite de butyle et le nitrite d'amyle. Un tel mélange peut en outre comprendre du $SF_6$. Toutefois, peu d'informations quant aux propriétés isolantes de ce mélange sont fournies.

La demande internationale WO 2008/073790, **[3],** décrit nombre d'autres gaz diélectriques utilisables dans le domaine de l'isolation électrique et de l'extinction des arcs électriques dans des appareils électriques moyenne ou haute tension.

Il existe d'autres alternatives prometteuses d'un point de vue caractéristiques électriques et PRG, comme le trifluoroiodométhane ($CF_3I$) . En effet, le $CF_3I$ présente une rigidité diélectrique supérieure à celle du $SF_6$ et ce, aussi bien en champ homogène qu'en champ divergent, pour un PRG inférieur à 5 et une durée de séjour dans l'atmosphère de 0,005 année. Malheureusement, outre que le $CF_3I$ est cher, il possède une valeur moyenne d'exposition (VME) de l'ordre de 3 à 4 ppm et est classé parmi les substances cancérigènes, mutagènes et reprotoxiques (CMR) de catégorie 3, ce qui est rédhibitoire pour une utilisation à une échelle industrielle.

La demande internationale WO 2012/080246, **[4],** décrit l'utilisation d'une (ou plusieurs) fluorocétone(s) en mélange avec l'air comme moyen d'isolation électrique et/ou d'extinction de l'arc électrique à faible impact environnemental. Du fait des points d'ébullition élevés pour les fluides proposés, c'est-à-dire 49°C pour le fluorocétone C6 et 23°C pour le fluorocétone C5, ces fluides se retrouvent à l'état liquide aux pressions et température minimales de service usuelles pour l'appareillage électrique moyenne et haute tension obligeant les inventeurs à ajouter des systèmes de vaporisation de la phase liquide ou de chauffage extérieur de l'appareillage afin de maintenir la température de l'appareil au-dessus de la température de liquéfaction des fluorocétones. Ce système extérieur de vaporisation et surtout de chauffe complique la conception de l'appareil électrique, en diminue sa fiabilité en cas de rupture d'alimentation électrique et engendre une consommation électrique additionnelle pouvant atteindre la centaine de MWh sur la durée de vie de l'appareil électrique, ce qui va à l'encontre de l'objectif de réduction de l'impact environnemental de l'appareil et notamment la réduction des émissions carbone. Du point de vue fiabilité à basse température, en cas de rupture d'alimentation électrique à basse température, la phase gazeuse du fluorocétone(s) liquéfierait abaissant fortement la concentration en fluorocétone(s) dans le mélange gazeux et diminuant ainsi le pouvoir d'isolation de l'appareil, qui serait incapable de tenir la tension en cas de réalimentation électrique.

Il a également été proposé d'utiliser des systèmes hybrides d'isolation associant une isolation gazeuse, par exemple par de l'air sec, de l'azote ou du $CO_2$, à une isolation solide. Comme décrit dans la demande de brevet européen publiée sous le n° 1 724 802, **[5],** cette isolation solide consiste, par exemple, à recouvrir les pièces sous tension qui présentent un fort gradient électrique par une résine du type résine époxyde ou analogue, ce qui permet de réduire le champ auquel sont soumises les pièces sous tension. La demande internationale WO2013041697 se rapporte également à un appareil électrique haute tension dans lequel l'isolation électrique et/ou l'extinction des arcs électriques est (sont) assurée(s) par un mélange comprenant une hydrofluorooléfine et une fluorocétone, éventuellement associées à un gaz de dilution. Le brevet FR1265731 divulgue l'utilisation de perfluoro-butyronitriie (C3F7CN)comme diélectrique gazeux. Cependant, l'isolation ainsi obtenue n'est pas équivalente à celle fournie par le $SF_6$ et l'utilisation de ces systèmes hybrides nécessite d'augmenter le volume des appareils électriques par rapport à celui qu'autorise une isolation au $SF_6$.

Concernant la coupure d'un arc électrique sans $SF_6$, différentes solutions existent : coupure dans l'huile, coupure dans l'air ambiant, coupure avec ampoule à vide. Toutefois, les appareils avec coupure dans l'huile présentent l'inconvénient majeur d'exploser en cas de non coupure ou de défaut interne. Les appareils à coupure dans l'air ambiant sont généralement de grandes dimensions, coûteux et sensibles à l'environnement (humidité, pollution), tandis que les appareils, notamment les interrupteurs sectionneurs, avec ampoule à vide sont très onéreux et très peu présents sur le marché dans le domaine de la haute tension supérieur à 72,5 kV.

Compte tenu de ce qui précède, les inventeurs se sont donc fixé pour but général de trouver une alternative au $SF_6$ présentant un impact environnemental faible par rapport à un appareil identique au $SF_6$ tout en maintenant les caractéristiques de l'appareil, du point de vue de sa capacité d'isolation et de coupure, proches de celles du $SF_6$ sans augmenter, de manière significative, la taille de l'appareil et la pression du gaz à l'intérieur.

De plus, les inventeurs se sont fixé pour but de maintenir les plages de température de service de l'appareil électrique, proches de celles des appareils équivalents $SF_6$ et ce, sans moyen de chauffe extérieur.

Plus spécifiquement, les inventeurs se sont fixé pour but de trouver un système d'isolation comprenant au moins un gaz ou un mélange de gaz qui, tout en présentant des propriétés d'isolation électrique et d'extinction d'arc électrique suffisantes pour une application dans le domaine de l'appareillage électrique haute tension et notamment comparables à celles du $SF_6$, ait un impact sur l'environnement faible ou nul.

Ils se sont aussi fixé pour but que ce système d'isolation et notamment le gaz ou le mélange de gaz qu'il comprend ne soit pas toxique pour l'homme et les animaux.

Ils se sont encore fixé pour but que le système d'isolation et notamment le gaz ou le mélange de gaz ait un coût de fabrication ou d'achat compatible avec une utilisation à une échelle industrielle.

Ils se sont encore fixé pour but que l'appareillage électrique moyenne ou haute tension basé sur ce système d'isolation et notamment le gaz ou le mélange de gaz ait une taille et une pression proches d'appareils équivalents isolés au $SF_6$ et ne présente pas de liquéfaction à la température minimale d'utilisation sans ajout de source extérieur de chauffage.

## EXPOSÉ DE L'INVENTION

Les buts fixés et d'autres encore sont atteints par l'invention qui propose l'utilisation d'un mélange gazeux particulier, éventuellement combiné à une isolation solide permettant d'obtenir un appareil électrique moyenne ou haute tension à faible impact environnemental.

Ainsi, le système isolant mis en oeuvre dans le cadre de la présente invention est basé sur un milieu gazeux comprenant de l'heptafluoroisobutyronitrile en mélange avec du dioxyde de carbone et de l'oxygène en faible quantité comme gaz d'isolation électrique et/ou d'extinction des arcs électriques dans un appareil électrique moyenne ou haute tension.

De façon générale, la présente invention propose un appareil électrique moyenne ou haute tension comprenant une enceinte étanche dans laquelle se trouvent des composants électriques et un mélange gazeux assurant l'isolation électrique et/ou l'extinction des arcs électriques susceptibles de se produire dans cette enceinte, le mélange gazeux comprenant de l'heptafluoroisobutyronitrile, du dioxyde de carbone et de l'oxygène en faible quantité.

Dans l'appareil électrique selon la présente invention, l'isolation gazeuse met en oeuvre un mélange gazeux comprenant de l'heptafluoroisobutyronitrile, du dioxyde de carbone et de l'oxygène en faible quantité.

L'heptafluoroisobutyronitrile de formule (I) : $(CF_3)_2CFCN$ (I), ci-après désigné i-$C_3F_7CN$, correspond au 2,3,3,3-tétrafluoro-2-trifluorométhyl propanenitrile, de numéro CAS : 42532-60-5, présentant un point d'ébullition de -3,9°C à 1013 hPa (point d'ébullition mesuré selon ASTM D1120-94 "Standard Test Method for Boiling Point of Engine Coolants").

La tenue diélectrique relative de l'heptafluoroisobutyronitrile de formule (I), normalisée par rapport au $N_2$ et comparée à celle des différents gaz utilisés et à celle du $SF_6$ est donnée dans le Tableau I ci-après, ladite tenue diélectrique étant mesurée à pression atmosphérique, sous tension continue, entre deux électrodes en acier de diamètre 2,54 cm et espacées de 0,1 cm.

Tableau I

| $N_2$ | $CO_2$ | $O_2$ | $SF_6$ | i-$C_3F_7CN$ |
|-------|--------|-------|--------|--------------|
| 1,0   | 0,88   | 1,0   | 2,5    | 5,5          |

Le Tableau II ci-après reprend la tenue diélectrique relative des différents gaz étudiés, normalisée par rapport au gaz que l'on souhaite remplacer i.e. le $SF_6$.

Tableau II

| $SF_6$ | $N_2$ | $CO_2$ | $O_2$ | $C_3F_7CN$ |
|--------|-------|--------|-------|------------|
| 1,0    | 0,4   | 0,35   | 0,4   | 2,2        |

Ainsi, l'heptafluoroisobutyronitrile de formule (I) tel que précédemment défini, qui n'est ni toxique, ni corrosif, ni inflammable et qui présente un PRG faible par rapport à celui du $SF_6$, est doté de propriétés d'isolation électrique et d'extinction des arcs électriques propres à lui permettre de remplacer en mélange avec un gaz de dilution, le $SF_6$ comme gaz d'isolation et/ou d'extinction d'arc dans des appareils électriques de moyenne ou haute tension.

Plus particulièrement, la présente invention propose une isolation gazeuse à faible impact environnemental comprenant un mélange gazeux à faible impact environnemental (PRG faible par rapport au $SF_6$) compatible avec les températures d'utilisation minimales de l'appareillage électrique et ayant des propriétés diélectriques, de coupure et de dissipation thermique améliorées par rapport aux gaz classiques comme le $CO_2$, l'air ou l'azote.

Dans ce qui précède et ce qui suit, les termes « moyenne tension » et « haute tension » sont utilisés dans leur acceptation habituelle, à savoir que le terme « moyenne tension » désigne une tension qui est supérieure à 1 000 volts en courant alternatif et à 1 500 volts en courant continu mais qui ne dépasse pas 52 000 volts en courant alternatif et 75 000 volts en courant continu, tandis que le terme « haute tension » désigne une tension qui est strictement supérieure à 52 000 volts en courant alternatif et à 75 000 volts en courant continu.

Dans le cadre de l'invention, l'heptafluoroisobutyronitrile de formule (I) tel que précédemment défini est utilisé en mélange avec un gaz de dilution particulier qui répond aux quatre critères suivants :

(1) présenter une température d'ébullition très basse, inférieure à la température minimale d'utilisation de l'appareil ;
(2) présenter une rigidité diélectrique supérieure ou égale à celle du dioxyde de carbone dans des conditions d'essai identiques (même appareillage, même configuration géométrique, mêmes paramètres opératoires, ...) à celles utilisées pour mesurer la rigidité diélectrique du dioxyde de carbone ;
(3) être dénué de toxicité pour l'homme et les animaux ; et
(4) présenter un PRG plus faible que celui de l'heptafluoroisobutyronitrile de sorte que la dilution de l'heptafluoroisobutyronitrile par le gaz de dilution ait également pour effet d'abaisser l'impact environnemental de l'heptafluoroisobutyronitrile puisque le PRG d'un mélange gazeux est une moyenne pondérée, dérivée de la somme de la fraction de masse de chacune des substances multipliée par le PRG de chacun des composants.

Les gaz de dilution habituellement utilisés sont des gaz neutres dont le PRG est très faible, voire nul. Aussi, le gaz de dilution est, typiquement, du dioxyde de carbone dont le PRG est égal à 1.

Dans le cadre de la présente invention, les inventeurs ont trouvé que l'ajout de quelques pourcents d'oxygène ($O_2$, GWP = 0) au mélange (heptafluoroisobutyronitrile + dioxyde de carbone) permet d'obtenir une synergie des propriétés d'isolation du mélange gazeux total (cf. Tableau VII ci-après).

De plus, le mélange de gaz ternaire mis en oeuvre dans le cadre de la présente invention améliore à la fois (i) l'isolation électrique permettant de conserver les cuves existantes des compartiments fonctionnant en $SF_6$ et (ii) la performance de coupure notamment pour les compartiments sectionneur de mise à la terre (MALT) et disjoncteur.

L'oxygène est utilisé, dans le cadre de la présente invention, en une faible quantité. Par « faible quantité », on entend dans le cadre de la présente invention de l'oxygène présent dans le mélange gazeux comprenant de l'heptafluoroisobutyronitrile, du dioxyde de carbone et de l'oxygène en un pourcentage molaire compris entre 1 et 25%, notamment entre 2 et 15% et, en particulier entre 2 et 10%.

De plus, l'heptafluoroisobutyronitrile tel que précédemment défini est présent, dans le mélange gazeux comprenant de l'heptafluoroisobutyronitrile, du dioxyde de carbone et de l'oxygène, en un pourcentage molaire ($M_{he}$) qui est au moins égal à 80% du pourcentage molaire M, déterminé par la formule (II) :

$$M = (P_{he}/P_{mélange}) \times 100 \quad (II)$$

dans laquelle $P_{mélange}$ représente la pression totale du mélange à 20°C dans l'appareil électrique et $P_{he}$ représente la pression partielle, exprimée dans la même unité, qui équivaut à 20°C à la pression de vapeur saturante que présente l'heptafluoroisobutyronitrile tel que précédemment défini à la température minimale d'utilisation de l'appareil électrique.

La pression $P_{he}$ est, elle-même, approximée par la formule (III) :

$$P_{he} = (PVS_{he} \times 293)/(T_{min} + 273) \quad (III)$$

dans laquelle $PVS_{he}$ représente la pression de vapeur saturante de l'heptafluoroisobutyronitrile tel que précédemment défini à la température minimale $T_{min}$, exprimée en degrés Celsius, d'utilisation de l'appareil électrique.

Ainsi, les propriétés diélectriques du milieu gazeux sont les plus élevées possibles et se rapprochent au mieux de celles du $SF_6$.

Avantageusement, dans le cadre de la présente invention, la température minimale d'utilisation $T_{min}$ est choisie parmi 0°C, -5°C, -10°C, -15°C, -20°C, -25°C, -30°C, -35°C, -40°C, -45°C et -50°C et, en particulier, choisie parmi 0°C, -5°C, -10°C, -15°C, -20°C, -25°C, -30°C, -35°C et -40°C.

Dans une 1ère forme de mise en oeuvre, l'appareil électrique est un appareil moyenne tension ou haute tension pour lequel la présence partielle du mélange à l'état liquide n'est pas de nature à réduire l'isolation. Dans ce cas, il est possible d'utiliser un mélange dans lequel l'heptafluoroisobutyronitrile est présent en un pourcentage molaire $M_{he}$, supérieur au pourcentage molaire M. Auquel cas, le pourcentage molaire de l'heptafluoroisobutyronitrile est, typiquement, compris entre 95% et 130%, mieux encore entre 97% et 120%, idéalement entre 99% et 110% du pourcentage molaire M tel que précédemment défini. Dans un tel cas, la tenue diélectrique de l'appareil sera testée à une pression partielle d'heptafluoroisobutyronitrile dans le mélange gazeux pour laquelle le gaz ne présente pas de liquéfaction à la température minimale de service afin de valider la tenue diélectrique dudit appareil sur l'ensemble de sa plage de températures.

Dans une 2[nde] forme de mise en oeuvre, l'appareil électrique est un appareil moyenne ou haute tension dans lequel l'isolation peut être affectée par la présence de phase liquide. Dans cette forme de mise en oeuvre, il est souhaitable que le mélange heptafluoroisobutyronitrile/ gaz de dilution soit exclusivement ou quasi exclusivement à l'état gazeux dans toute la gamme des températures d'utilisation de cet appareil. Il est donc avantageux que l'heptafluoroisobutyronitrile soit présent dans ce mélange en un pourcentage molaire ($M_{he}$) qui ne dépasse pas 100% du pourcentage molaire M afin de ne pas présenter de phase de liquéfaction à la température minimale d'utilisation. Auquel cas, le pourcentage molaire de l'heptafluoroisobutyronitrile est, avantageusement, compris entre 95% et 100% et, en particulier, entre 98% et 100% du pourcentage molaire M tel que précédemment défini.

Avantageusement encore, le mélange gazeux ne comprend que de l'heptafluoroisobutyronitrile, du dioxyde de carbone et de l'oxygène, dans les proportions telles que précédemment définies. En d'autres termes, le mélange gazeux est constitué d'heptafluoroisobutyronitrile, de dioxyde de carbone et d'oxygène, dans les proportions telles que précédemment définies.

Dans le but d'améliorer la tenue diélectrique de l'ensemble, le mélange gazeux comprenant de l'heptafluoroisobutyronitrile, du dioxyde de carbone et de l'oxygène est utilisé, dans un système d'isolation hybride, en combinaison avec une isolation solide, notamment de permittivité diélectrique faible, appliquée en une couche isolante d'épaisseur variable sur les pièces conductrices soumises à un champ électrique supérieur au champ de claquage de l'appareil moyenne ou haute tension sans isolation solide.

De fait, l'appareil électrique moyenne ou haute tension selon l'invention présente des composants électriques qui ne sont pas recouverts d'une couche diélectrique solide.

En d'autres termes, dans l'enceinte étanche de l'appareil électrique moyenne ou haute tension selon la présente invention, se trouvent des composants électriques recouverts d'une couche diélectrique solide d'épaisseur variable.

La couche diélectrique/isolante mise en oeuvre dans l'invention présente une permittivité relative faible. Par « permittivité relative faible », on entend une permittivité relative inférieure ou égale à 6. On rappelle que la permittivité relative, également appelée constante diélectrique, d'un matériau, qui est notée $\varepsilon_r$, est une grandeur sans dimension qui peut être définie par les formules (IV) et (V) suivantes :

$$\varepsilon_r = \varepsilon/\varepsilon_0 \quad (IV),$$

avec

$$\varepsilon = (e * C)/S \text{ et } \varepsilon_0 = 1/(36\pi * 10^9) \quad (V)$$

dans lesquelles :

- $\varepsilon$ correspond à la permittivité absolue (exprimée en Farads/mètre) du matériau ;
- $\varepsilon_0$ correspond à la permittivité (exprimée en Farads/mètre) du vide ;
- C correspond à la capacité (exprimée en Farads) d'un condensateur plan comprenant deux électrodes parallèles entre lesquelles est disposée une couche du matériau pour lequel on veut déterminer la permittivité, cette couche représentant une éprouvette ;
- e correspond à la distance (exprimée en mètres) entre les deux électrodes parallèles du condensateur plan, ce qui correspond, dans notre cas, à l'épaisseur de l'éprouvette; et
- S correspond à la surface (exprimée en mètres carrés) de chaque électrode constitutive du condensateur plan.

Dans le cadre de la présente invention, la capacité est déterminée comme dans la norme CEI 60250-ed1.0, à savoir en utilisant un condensateur comprenant deux électrodes circulaires d'un diamètre allant de 50 à 54 mm, solidaires de l'éprouvette constituée du matériau, ces électrodes étant obtenues par pulvérisation d'une peinture conductrice avec un dispositif de garde. L'éprouvette présente des dimensions de 100 mm x 100 mm et une épaisseur de 3 mm. La distance entre les électrodes du condensateur, qui correspond à la grandeur e mentionnée ci-dessus, est donc de 3 mm.

Par ailleurs, la capacité est déterminée sous un niveau d'excitation de 500 volts RMS, à une fréquence de 50 hertz, sous une température de 23°C et une humidité relative de 50%. La durée d'application de la tension susmentionnée est de 1 min.

Par « couche isolante/diélectrique d'épaisseur variable », on entend dans le cadre de la présente invention que le matériau diélectrique, déposé ou appliqué sur les composants électriques ou pièces conductrices, présente des épaisseurs variables en fonction de la pièce conductrice ou partie de pièce conductrice sur laquelle il est déposé. L'épaisseur de la couche ne varie pas durant l'utilisation de l'appareil électrique mais est déterminée lors de la préparation des éléments constituant cet appareil.

Dans le cadre de l'invention, la couche isolante est appliquée en couche de faible ou forte épaisseur sur les pièces conductrices soumises à un champ électrique supérieur au champ de claquage du système sans isolation solide.

Plus particulièrement, l'épaisseur de la couche isolante mise en oeuvre dans le cadre de la présente invention étant fonction du facteur d'utilisation du champ électrique, $\eta$, défini comme le rapport du champ électrique moyen (U/d) sur le champ électrique maximal, Emax ($\eta$ = U/(Emax*d)), la couche est épaisse pour des facteurs d'utilisation proches de 0,3 i.e. compris entre 0,2 et 0,4 et la couche est fine pour des facteurs d'utilisation s'approchant de 0,9 i.e. supérieur à 0,5 et notamment supérieur à 0,6.

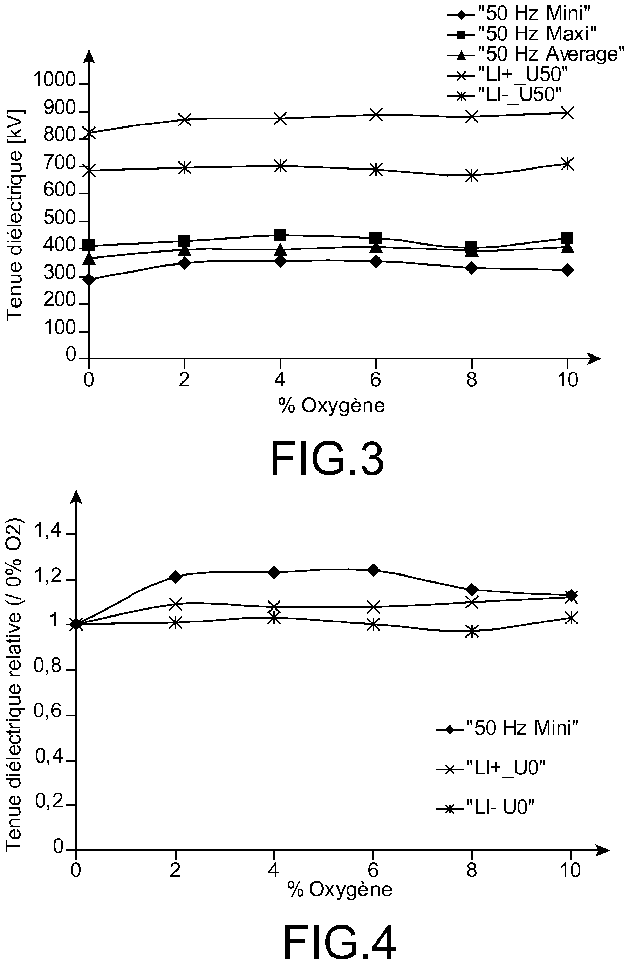

En référence à la Figure 4, les couches épaisses (6) sont typiquement déposées sur les électrodes (5) à l'endroit où le coefficient d'utilisation du champ électrique est proche de 0,3 et les couches minces (7) sur les conducteurs (1) à l'endroit où le coefficient d'utilisation du champ électrique est supérieur à 0,6.

Dans le cadre de la présente invention, on entend par « couche épaisse » une couche d'épaisseur supérieure à 1 mm et inférieure à 10 mm et par « couche mince » une couche d'épaisseur inférieure à 1 mm, avantageusement inférieure à 500 $\mu$m, notamment comprise entre 60 et 100 pm.

La couche isolante solide mise en oeuvre dans le cadre de la présente invention peut comprendre un seul matériau diélectrique ou plusieurs matériaux diélectriques différents. De plus, la composition de la couche isolante i.e. la nature du ou des matériaux diélectriques qu'elle comprend peut différer en fonction de la pièce conductrice ou partie de pièce conductrice sur laquelle la couche isolante solide est déposée.

En particulier, dans le cadre de l'invention, les matériaux sélectionnés pour réaliser les couches isolantes épaisses présentent des permittivités relatives faibles, c'est-à-dire inférieures ou égales à 6. Dans une forme de mise en oeuvre particulière, les permittivités diélectriques des matériaux isolants utilisés pour réaliser les couches solides épaisses présentent des permittivités relatives de l'ordre de 3, voire inférieures i.e. des permittivités relatives inférieures ou égales à 4 et notamment inférieures ou égales à 3. A titre d'exemple de matériaux utilisables pour réaliser les couches diélectriques, solides et épaisses de l'appareil électrique selon l'invention, on peut citer le polytétrafluoroéthylène, le polyimide, le polyéthylène, le polypropylène, le polystyrène, le polycarbonate, le polyméthyl méthacrylate, le polysulfone, le polyetherimide, le polyether ether cétone, le parylène N™, le Nuflon™, le silicone et la résine époxyde.

En ce qui concerne les matériaux utilisés pour réaliser les couches minces, les matériaux sélectionnés dans le cadre de cette invention présentent des permittivités relatives de l'ordre de 3 i.e. comprises entre 2 et 4 et notamment entre 2,5 et 3,5. A titre d'exemple de matériaux utilisables pour réaliser les couches diélectriques, solides et minces de l'appareil électrique selon l'invention, on peut citer le polytétrafluoroéthylène, le polyimide, le polyéthylène, le polypropylène, le polystyrène, le polyamide, l'Ethylène Monochlorotrifluoroéthylène le parylène N™, le Nuflon™, le HALAR™ et le HALAR C™.

Conformément à l'invention, cet appareil électrique peut être, en premier lieu, un transformateur électrique à isolation gazeuse comme, par exemple, un transformateur de puissance ou un transformateur de mesure.

Il peut également être une ligne à isolation gazeuse, aérienne ou souterraine, ou un jeu de barres pour le transport ou la distribution de l'électricité.

Il peut également être un élément de raccordement aux autres équipements du réseau comme par exemple les traversées aériennes ou les traversées de cloison

Enfin, il peut aussi être un appareil électrique de connexion/déconnexion (aussi appelé appareil ou chambre de coupure) comme, par exemple, un disjoncteur comme un disjoncteur du type « dead tank », un disjoncteur à autosoufflage (« puffer » ou « self blast »), un disjoncteur à autosoufflage à double mouvement des contacts d'arc, un disjoncteur à autosoufflage à effet thermique en simple mouvement des contacts d'arc, un disjoncteur à autosoufflage à effet thermique avec mouvement partiel de la tige de contact, un interrupteur, un sectionneur comme un AIS pour « Air-Insulated Swithgear » ou un GIS pour « Gas-Insulated Swithgear », un combiné interrupteur-fusibles, un sectionneur de mise à la terre ou un contacteur.

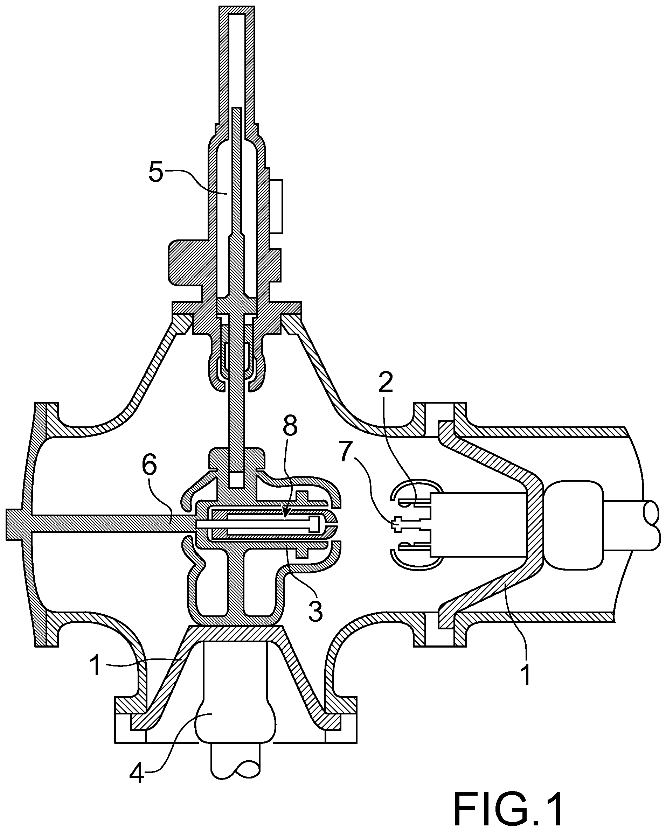

La Figure 1 présente un sectionneur de type GIS bien connu de l'homme du métier avec des contacts de MALT et des contacts de sectionneur et comprenant un cône isolant (1), deux contacts permanents (2 et 3), une électrode de cône (4), une bielle de manoeuvre de MALT (5), une bielle isolante (6), un contact d'arc fixe (7) et un tube de contact (8).

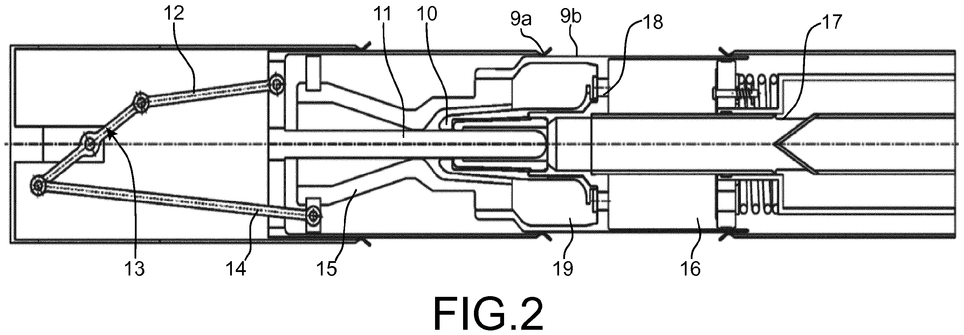

De même, à la Figure 2, est présentée une chambre de coupure à contacts permanents 9a, 9b et à deux contacts d'arc mobiles, c'est-à-dire à la fois celui 10 sous la forme d'une tulipe, et celui 11 sous la forme d'une tige. Cette chambre de coupure est dite double-mouvement car les deux contacts d'arc 10, 11 sont liés ensemble par des moyens d'accouplement 12, 13 et 14 de sorte à être mobiles ensemble en sens opposé. Le 1er levier 14 est fixé à la buse de soufflage mobile 15 et transmet le mouvement dans le sens opposé, par l'intermédiaire du 2ème levier, qui constitue le levier de renvoi 13 au troisième levier 12. Lors de l'ouverture, le gaz présent dans le volume de compression 16 est comprimé par le piston de soufflage 17 solidaire du contact d'arc 10 sous forme de tulipe et du contact permanent 9b, et est évacué par le clapet 18 vers le volume de soufflage 19 et contribue par la suite à l'extinction de l'arc électrique.

La présente invention concerne également l'utilisation d'un mélange gazeux comprenant de l'heptafluoroisobutyronitrile, du dioxyde de carbone et de l'oxygène en faibles quantités comme gaz d'isolation électrique et/ou d'extinction des arcs électriques dans un appareil électrique moyenne ou haute tension dont les composants électriques peuvent en outre être recouverts d'une couche isolante solide d'épaisseur variable telle que précédemment définie.

D'autres caractéristiques et avantages de l'invention ressortiront du complément de description qui suit donné à titre illustratif et non limitatif et qui fait référence aux figures annexées.

**BRÈVE DESCRIPTION DES DESSINS**

La Figure 1 présente une vue en coupe longitudinale d'un sectionneur de type GIS.

La Figure 2 présente une vue en coupe longitudinale d'une chambre de coupe d'un disjoncteur à autosoufflage à double mouvement des contacts d'arc.

La Figure 3 présente, en fonction de la teneur en oxygène, la tenue électrique de mélanges comprenant de l'heptafluoroisobutyronitrile, du dioxyde de carbone et de l'oxygène pour une température d'application de -30°C.

La Figure 4 présente, en fonction de la teneur en oxygène, la tenue électrique relative de mélanges comprenant de l'heptafluoroisobutyronitrile, du dioxyde de carbone et de l'oxygène, par rapport à un mélange ne comprenant que de l'heptafluoroisobutyronitrile et du dioxyde de carbone pour une température d'application de -30°C.

La Figure 5 présente le profil de champ électrique dans la couche isolante solide et la phase gazeuse pour une permittivité relative de 2,9 et 5,3.

La Figure 6 présente une schématisation d'une partie d'un appareil électrique selon la présente invention.

**EXPOSÉ DÉTAILLÉ DE MODES DE RÉALISATION PARTICULIERS**

L'invention est basée sur l'utilisation d'un mélange gazeux particulier à faible impact environnemental combinant l'heptafluoroisobutyronitrile tel que précédemment défini et utilisé avec au moins un gaz de dilution, encore appelé gaz neutre ou gaz tampon, constitué de dioxyde de carbone et d'oxygène.

Dans la présente, les expressions « gaz de dilution », « gaz neutre » ou « gaz tampon » sont équivalentes et peuvent être utilisées de façon interchangeable.

Avantageusement, l'heptafluoroisobutyronitrile est présent dans l'appareil électrique sous forme entièrement gazeuse quelle que soit la température d'utilisation de cet appareil. Il convient donc que la pression de l'heptafluoroisobutyronitrile à l'intérieur de l'appareil électrique soit choisie en fonction de la pression de vapeur saturante (PVS) que présente l'heptafluoroisobutyronitrile à la température la plus basse d'utilisation dudit appareil.

Toutefois, comme le remplissage en gaz des appareils électriques se fait usuellement à température ambiante, la pression de l'heptafluoroisobutyronitrile à laquelle on se réfère pour remplir l'appareil électrique est la pression qui correspond à la PVS que présente l'heptafluoroisobutyronitrile à la température la plus basse d'utilisation dudit appareil électrique, ramenée à la température de remplissage, par exemple 20°C, .

A titre d'exemple, le Tableau III ci-après indique les pressions de vapeur saturante, notées $PVS_{i-C3F7CN}$ et exprimées en hectopascals, que présente l'heptafluoroisobutyronitrile aux températures de 0°C, -5°C, -10°C, -15°C, -20°C, -25°C, -30°C et -40°C, ainsi que les pressions, notées $P_{i-C3F7CN}$ et exprimées en hectopascals, qui correspondent à ces pressions de vapeur saturante ramenées à 20°C.

Tableau III : pressions de vapeur saturante du $i-C_3F_7CN$

| Températures | $PVS_{i-C3F7CN}$ (hPa) | $P_{i-C3F7CN}$ (hPa) |
|---|---|---|
| 0°C | 1177 | 1264 |
| -5°C | 968 | 1058 |
| -10°C | 788 | 877 |
| -15°C | 634 | 720 |
| -20°C | 504 | 583 |
| -25°C | 395 | 466 |
| -30°C | 305 | 368 |
| -35°C | 232 | 286 |
| -40°C | 173 | 218 |

*Exemple d'application et remplissage*

Selon l'appareil électrique, la pression préconisée de remplissage en milieu d'isolation électrique et/ou d'extinction des arcs électriques varie. Elle est toutefois, typiquement de plusieurs bars (i.e. plusieurs milliers d'hectopascals).

L'heptafluoroisobutyronitrile est utilisé en mélange avec du dioxyde de carbone et différentes teneurs d'oxygène pour pouvoir obtenir le niveau de pression de remplissage préconisé.

Ainsi, par exemple, un appareil prévu pour, d'une part, être utilisé à une température minimale de -30°C, et, d'autre part, être rempli à 5 bars (i.e. 5 000 hPa) à la température ambiante de 20°C, sera rempli avec 0,368 bar (i.e. 368 hPa) d'heptafluoroisobutyronitrile et 4,632 bars (i.e. 4632 hPa) du gaz de dilution pour la même température ambiante.

Un tel appareil est notamment un appareil haute tension de type GIS 145 kV de référence commerciale B65 d'Alstom conçu pour une application à -30°C rempli avec un gaz de dilution/$i\text{-}C_3F_7CN$. Pour cet appareil de température minimale d'application de -30°C, l'heptafluoroisobutyronitrile sera à une pression de 0,368 bar absolu mesurée à 20°C. Un complément de gaz tampon sera effectué pour obtenir les propriétés finales du gaz mélange. Plus particulièrement, dans le cadre de la présente invention, un complément de $CO_2$ est effectué pour obtenir la pression totale du mélange. Une partie du $CO_2$ est substituée par de l'oxygène afin de déterminer l'apport de l'oxygène à la tenue diélectrique totale. Différents ratio molaires en oxygène sont testés : 0%, 2%, 4%, 6%, 8% et 10%.

La pression partielle d'heptafluoroisobutyronitrile étant de 0,368 bar absolu mesurée à 20°C et la pression totale du gaz de 5 bars absolus, le ratio molaire de $i\text{-}C_3F_7CN$ est alors de 0,368/5 soit environ 7,4%.

Afin de déterminer la composition du mélange gazeux au remplissage, on détermine le pourcentage molaire M en heptafluoroisobutyronitrile à la pression de remplissage de l'appareil électrique préconisée, qui représente la proportion maximale d'heptafluoroisobutyronitrile que doit comporter le mélange heptafluoroisobutyronitrile/(dioxyde de carbone + éventuellement oxygène) pour qu'il n'y ait pas de liquide dans l'enceinte de l'appareil électrique. Le pourcentage molaire M est donné par la formule $M = (P_{he}/P_{mélange}) \times 100$, avec $P_{he}$ qui représente la pression équivalente, à la température de remplissage (typiquement de l'ordre de 20°C), à la pression de vapeur saturante PVS de l'heptafluoroisobutyronitrile à la température minimale d'utilisation $T_{min}$ de l'appareil ($P_{he} = (PVS_{he} \times 293)/(273 + T_{min})$).

Ensuite, on choisit le pourcentage molaire $M_{he}$ de remplissage en fonction de M. Dans certains cas, il est impératif que $M_{he}$ ne dépasse pas M pour éviter toute présence de liquide.

Par contre, il est parfois possible, par exemple en moyenne tension ou pour certains appareils électriques haute tension pour lesquels leur isolation n'est pas affectée par la présence de phase liquide, d'avoir un peu de liquide à basse ou très basse température, auquel cas $M_{he}$ peut atteindre 110% voire 130% de M. Par ailleurs, comme l'heptafluoroisobutyronitrile possède une meilleure tenue diélectrique que les gaz neutres, il est souhaitable d'optimiser le remplissage par l'heptafluoroisobutyronitrile : on choisit donc, de préférence, $M_{he}$ de sorte qu'il soit supérieur ou égal à 80% de M, mieux encore supérieur ou égal à 95% de M, mieux encore supérieur ou égal à 98%·de M, par exemple égal à 99% de M.

Exemple de remplissage pour le cas 0% d'oxygène (exemple comparatif) :

La pression partielle d'heptafluoroisobutyronitrile étant de 0,368 bar absolu mesurée à 20°C et la pression totale du gaz de 5 bars absolus, le ratio molaire de $i\text{-}C_3F_7CN$ est alors de 0,368/5 soit environ 7,4%. Pour cela, un complément est réalisé avec le $CO_2$ jusqu'à une pression totale de 5 bars absolus (4 bars relatifs).

Le remplissage de l'appareil peut être effectué par addition des gaz en commençant par $i\text{-}C_3F_7CN$ qui présente la vapeur de pression saturante la plus faible à la température de remplissage (par rapport à $CO_2$) puis en effectuant le complément de $CO_2$ jusqu'à atteindre la pression totale du mélange (4 bars relatifs) ou effectué à l'aide d'un mélangeur de gaz permettant de contrôler le rapport entre le $i\text{-}C_3F_7CN$ et le gaz porteur $CO_2$, ce rapport étant maintenu constant et égal à 7,4% en pression tout au long du remplissage grâce à l'utilisation de débitmètre massique de précision.

Exemple de remplissage pour le cas 2% d'oxygène (invention) :

La pression partielle d'heptafluoroisobutyronitrile étant de 0,368 bar absolu mesurée à 20°C. Un complément est réalisé, tout d'abord, avec de l'$O_2$ pur à 0,1 bar absolu et ensuite avec le $CO_2$ jusqu'à une pression totale de 5 bars absolus (4 bars relatifs). Le ratio molaire de $i\text{-}C_3F_7CN$ est alors de 0,368/5 soit environ 7,4% ; le ratio molaire d'$O2$ de 0,1/5 soit 2% et le ratio molaire de $CO_2$ de 4,53/5 soit environ 90,6%.

Le remplissage de l'appareil peut être effectué par addition des gaz en commençant par $i\text{-}C_3F_7CN$ qui présente la vapeur de pression saturante la plus faible à la température de remplissage (par rapport à $CO_2$ et $O_2$) complété tout d'abord par l'oxygène pour plus de précision et complété ensuite avec le $CO_2$ jusqu'à atteindre la pression totale du mélange (4 bars relatifs) ou effectué à l'aide d'un mélangeur de gaz permettant de contrôler le rapport entre le $i\text{-}C_3F_7CN$, l'$O_2$ et le $CO_2$, ce rapport étant maintenu constant et égal à 7,4% en pression tout au long du remplissage grâce à l'utilisation de débitmètre massique de précision.

*Résultats électriques : Essais de tenue à fréquence industrielle et aux chocs de foudre en haute tension*

Ces essais ont été réalisés sur un jeu de barres d'un poste blindé B65 d'ALSTOM de 145 kV de tension assignée, conformément à la norme CEI 62271-1 relative aux appareillages à haute tension.

Le Tableau IV ci-après indique les résultats obtenus pour un milieu gazeux ne contenant que du $CO_2$, que de l'air sec, que du $SF_6$ ou un mélange de $CO_2$ et d'hepta-fluoroisobutyronitrile ($CO_2$/i-$C_3F_7CN$) dans un rapport molaire de 7,4/92,6, pour une pression totale identique, soit 4 bars relatifs.

Tableau IV

| Milieu gazeux | Fréquence industrielle (kV) | Choc de foudre positif (kVc) | Choc de foudre négatif (kVc) |
|---|---|---|---|
| $CO_2$ | 176 | 366 | -310 |
| Air sec | 211 | 334 | -369 |
| $SF_6$ | 456 | 890 | -889 |
| $CO_2$/i-$C_3F_7CN$ | 367 | 820 | -685 |

De plus, la tenue électrique des mélanges $CO_2$/i-$C_3F_7CN$ (-30°C) pour différentes teneurs en oxygène (0% à 10%) a été mesurée :

- sous 50 Hz : on reporte la tension minimale d'amorçage (Min), la tension maximale d'amorçage (Max) et la valeur moyenne sur 30 mesures (moyenne) ;
- sous choc de foudre (polarité négative (LI-) et positive (LI+)) : on reporte la tension U50 qui représente la tension à laquelle il s'est produit 50% de claquage obtenue par la méthode de montée descente et la tension U0 qui est une tension de tenue (0% de claquage).

Les résultats sont présentés ci-après dans le Tableau V.

Tableau V

| C3F7CN | Bar abs | 0,367 | 0,369 | 0,37 | 0,371 | 0,371 | 0,37 |
|---|---|---|---|---|---|---|---|
| O2 | Bar abs | 0 | 0,105 | 0,207 | 0,308 | 0,405 | 0,506 |
| CO2 | Bar abs | 4,683 | 4,576 | 4,473 | 4,361 | 4,284 | 4,174 |
| Pression totale | Bar abs | 5,05 | 5,05 | 5,05 | 5,04 | 5,06 | 5,05 |
| % C3F7CN | % | 7,3% | 7,3% | 7,3% | 7,4% | 7,3% | 7,3% |
| % O2 | % | 0,0% | 2,1% | 4,1% | 6,1% | 8,0% | 10,0% |
| 50 Hz | moyenne | 367 | 396 | 397 | 408 | 393 | 407 |
| | Min | 286 | 347 | 354 | 355 | 331 | 324 |
| | Max | 410 | 429 | 450 | 437 | 402 | 438 |
| LI+ | U50 | 820 | 869 | 874 | 888 | 880 | 894 |
| | U0 | 780 | 850 | 840 | 840 | 860 | 870 |
| LI- | U50 | -685 | -693 | -701 | -689 | -665 | -710 |
| | U0 | -670 | -680 | -690 | -670 | -650 | -690 |

La Figure 3 présente, à partir de certains résultats du Tableau V, la tenue électrique des mélanges (i-$C_3F_7CN$ + $CO_2$ + éventuellement $O_2$) en fonction de la teneur en $O_2$ et ce, pour une température d'application de -30°C.

Le Tableau VI ci-après présente, à partir des résultats du Tableau V, la tenue diélectrique relative par rapport au mélange i-$C_3F_7CN$ + $CO_2$.

Tableau VI

| | | 0 | 2 | 4 | 6 | 8 | 10 |
|---|---|---|---|---|---|---|---|
| C3F7CN | Bar abs | 0,367 | 0,369 | 0,37 | 0,371 | 0,371 | 0,37 |
| O2 | Bar abs | 0 | 0,105 | 0,207 | 0,308 | 0,405 | 0,506 |
| CO2 | Bar abs | 4,683 | 4,576 | 4,473 | 4,361 | 4,284 | 4,174 |
| Pression totale | Bar abs | 5,05 | 5,05 | 5,05 | 5,04 | 5,06 | 5,05 |
| % C3F7CN | % | 7,3% | 7,3% | 7,3% | 7,4% | 7,3% | 7,3% |
| %O2 | % | 0,0% | 2,1% | 4,1% | 6,1% | 8,0% | 10,0% |
| 50 Hz | moyenne | 1,00 | 1,08 | 1,08 | 1,11 | 1,07 | 1,11 |
| | Min | 1,00 | 1,21 | 1,24 | 1,24 | 1,16 | 1,13 |
| | Max | 1,00 | 1,05 | 1,10 | 1,07 | 0,98 | 1,07 |
| LI+ | U50 | 1,00 | 1,06 | 1,07 | 1,08 | 1,07 | 1,09 |
| | U0 | 1,00 | 1,09 | 1,08 | 1,08 | 1,10 | 1,12 |
| LI- | U50 | 1,00 | 1,01 | 1,02 | 1,01 | 0,97 | 1,04 |
| | U0 | 1,00 | 1,01 | 1,03 | 1,00 | 0,97 | 1,03 |

La Figure 4 présente, à partir de certains résultats du Tableau VI, la tenue électrique relative des mélanges (i-$C_3F_7CN$ + $CO_2$ + éventuellement $O_2$) par rapport à un mélange (i-$C_3F_7CN$ + $CO_2$) en fonction de la teneur en $O_2$ et ce, pour une température d'application de -30°C.

On note une amélioration des propriétés diélectriques des mélanges dès l'ajout de 2% d'oxygène, notamment pour les valeurs de tenue diélectrique : la valeur minimale de claquage en 50 Hz et la valeur U0 en choc de foudre surtout en polarité positive, l'amélioration étant plus faible en polarité négative.

L'amélioration des propriétés électriques est notable pour une teneur en oxygène de 2 à 10% avec un optimum des propriétés électriques pour un ajout de 2 à 6% et une valeur centrale de 4%.

Dans ce cadre, les tenues diélectriques sur les gaz de référence ($CO_2$, $N_2$, $SF_6$, $CO_2$/i-$C_3F_7CN$ et sur le mélange $CO_2$/i-$C_3F_7CN$/4%v$O_2$ pour une température d'application de -30°C ont été mesurées en fréquence industrielle ainsi que sous choc de foudre en onde positive et négative selon la norme 62271-1 dans les mêmes configurations (GIS 145 kV de référence commerciale B65 d'Alstom conçu pour une application à -30°C). Les résultats sont présentés Tableau VII ci-après.

Tableau VII

| | $CO_2$ | $N_2$ | $CO_2$/i-$C_3F_7CN$ (-30°C) | $CO_2$/i-$C_3F_7CN$/4%$O_2$ (-30°C) | $SF_6$ |
|---|---|---|---|---|---|
| Fréquence industrielle, kV | 176 | 211 | 367 | **397** | 456 |
| Choc de foudre, positif, kVc | 366 | 334 | 820 | **874** | 890 |
| Choc de foudre, négatif, kVc | -310 | -369 | -685 | **-701** | -889 |

L'addition de 4% d'oxygène permet d'améliorer de manière significative la tenue diélectrique du mélange gazeux total en fréquence industrielle et en choc de foudre (polarité positive et négative) et d'atteindre 87% de la tenue $SF_6$ de l'appareil en 50Hz, 98% en choc de foudre polarité positive et 78% en choc de foudre polarité négative.

*Toxicité*

L'heptafluoroisobutyronitrile ne présente pas de toxicité spécifique pour l'homme avec une LC50 supérieure à 15000 ppm. De plus, par une dilution à environ 7% dans le $CO_2$, la toxicité se retrouve encore diminuée dans le ratio molaire ou volumique de mélange pour atteindre une LC50 de l'ordre de 70000 ppm pour le mélange et qui le classe dans le domaine des gaz « pratiquement non toxique » (classe de toxicité 5, selon l'échelle de toxicité de Hodge et Sterner).

*Flammabilité*

L'heptafluoroisobutyronitrile pur ainsi que les mélanges i-$C_3F_7$CN/$CO_2$ à faible teneur en oxygène sont ininflammables.

*Impact environnemental / PRG*

Le pouvoir de réchauffement global, ou PRG, de l'heptafluoroisobutyronitrile est de l'ordre de 2 400, soit 9,5 fois plus faible que celui du $SF_6$ et plus de 3,1 fois plus faible que celui d'un mélange de $SF_6$ et d'azote à 10% volumique de $SF_6$.

L'heptafluoroisobutyronitrile présente une masse molaire de 195 gr/mol.

Le PRG du mélange gazeux est calculé selon le Règlement (CE) No. 842/2006 du Parlement Européen et du Conseil du 17 mai 2006 relatif à certains gaz à effet de serre fluorés, Partie 2 « Méthode de calcul du potentiel de réchauffement planétaire (PRG) total d'une préparation ». Selon ce texte, le facteur PRG d'un mélange gazeux est une moyenne pondérée par rapport à la fraction massique de chaque substance multipliée par son facteur PRG.

En utilisation en mélange à 7,4% molaire dans le $CO_2$ (44 gr/mol) et l'oxygène à 4%, la fraction massique de l'heptafluoroisobutyronitrile est de 26%, alors le PRG du mélange est de l'ordre de 630, ce qui représente une réduction de l'ordre de 97,2% de l'équivalent carbone par rapport au $SF_6$ pur (Tableau VIII) .

Tableau VIII

| Gaz | Masse molaire | PRG | P (bar abs) | %mol (% P) | Fraction massique (%w) |
|---|---|---|---|---|---|
| i-$C_3F_7$CN | 195 | 2400 | 0,37 | 7,40% | 26,21% |
| $O_2$ | 32 | 0 | 0,207 | 3,71% | 2,16% |
| $CO_2$ | 44 | 1 | 5 | 89,65% | 71,64% |
| P totale | 6 | | | | |
| GWP mélange = | | **630** | | | |
| | | | | | |
| Réduction / $SF_6$ = | | **97,2%** | | | |

*Fin de vie*

En fin de vie ou après essais de coupure, le gaz est récupéré par les techniques classiques de récupération utilisant un compresseur et une pompe à vide. L'heptafluoroisobutyronitrile est alors séparé du dioxyde de carbone et de l'oxygène en utilisant une zéolithe capable de piéger uniquement le dioxyde de carbone et l'oxygène, de taille inférieure ; alternativement, une membrane à séparation sélective laisse s'échapper le dioxyde de carbone et l'oxygène et garde l'heptafluoroisobutyronitrile dont la taille et la masse molaire sont plus importantes ; toute autre option est envisageable.

*Association à une isolation solide*

Afin d'obtenir l'équivalence diélectrique par rapport au $SF_6$ (atteindre 100% de la tenue $SF_6$), sans dégrader ses performances à basse température, ni augmenter sa pression totale, le mélange gazeux présenté ci-dessus est utilisé en combinaison avec une isolation solide de permittivité diélectrique faible appliquée sur les pièces conductrices soumises à un champ électrique supérieur au champ de claquage du système sans isolation solide.

L'isolation solide mise en oeuvre dans le cadre de la présente invention se présente sous forme de couche dont l'épaisseur varie pour un appareil électrique donné. En effet, la couche isolante mise en oeuvre peut présenter une épaisseur faible (couche mince ou fine) ou une épaisseur forte (couche épaisse).

L'épaisseur de la couche isolante étant fonction du facteur d'utilisation du champ électrique, $\eta$, défini comme le rapport du champ électrique moyen (U/d) sur le champ électrique maximal, Emax ($\eta$ = U/(Emax*d)), la couche est épaisse pour des facteurs d'utilisation proches de 0,3 et la couche est fine pour des facteurs d'utilisation s'approchant de 0,9.

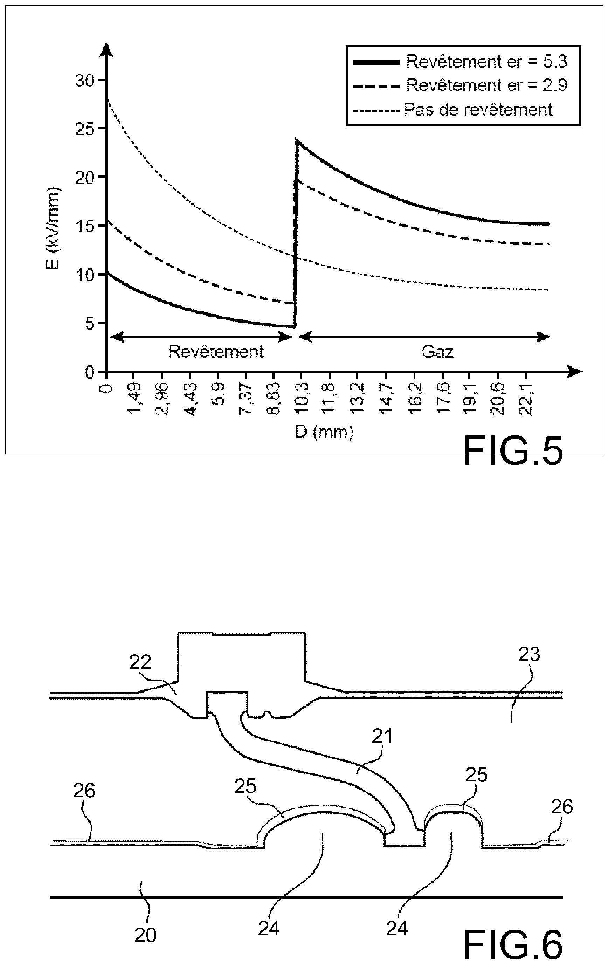

Les calculs présentés sur la Figure 5 mettent en évidence la réduction du champ électrique maximal auquel est soumis le gaz d'isolation dans le cas d'une isolation mixte combinant isolation solide appliquée en couche sur les parties soumises à des champs électriques forts, typiquement sur les électrodes.

**EP 3 047 491 B1**

Cette solution permet donc de diminuer, de manière significative, le champ électrique maximal sur la phase gazeuse et ainsi d'augmenter la tenue électrique de l'isolation totale dite mixte et composée en série de l'isolation solide et de l'isolation gazeuse. Ce phénomène de réduction du champ électrique sur la phase gazeuse est plus prononcé lorsque la permittivité diélectrique de la couche solide est faible.

En effet, dans l'exemple présenté, l'isolation hybride est composée d'une isolation sphérique solide d'une épaisseur de 10 mm en combinaison avec une isolation gazeuse d'épaisseur 15 mm, l'isolation totale faisant 25 mm. Le calcul de champ électrique a été réalisé pour deux isolations solides différentes présentant des permittivités relatives significativement différentes, typiquement 5,3 et 2,9.

Pour ce cas précis, le facteur de réduction du champ électrique sur la phase gazeuse est de l'ordre de 15% pour une isolation solide de permittivité diélectrique 5,3 et de l'ordre de 30% pour une isolation solide de permittivité diélectrique 2,9. Dans le cadre de cette invention, un matériau présentant une permittivité relative de l'ordre de 3 voire inférieure sera préféré pour réaliser les couches épaisses sur les électrodes.

L'ensemble de ces calculs diélectriques a été confirmé par des mesures réalisées sur appareillage électrique, présentant un facteur d'amélioration de l'ordre de 20% en tenue diélectrique (par rapport à une électrode non revêtue) pour une couche épaisse réalisée en résine époxyde présentant une permittivité relative de l'ordre de 5 et un facteur d'amélioration de l'ordre de 30% (par rapport à une électrode non revêtue) en tenue diélectrique pour une couche épaisse réalisée en silicone présentant une permittivité relative de l'ordre de 3.

Dans le cas des couches minces réalisées sur les pièces électriques soumises à des champs électriques plus faibles, les matériaux utilisés présentent des permittivités diélectriques de l'ordre de 3 et sont appliqués sous forme de couches minces dont l'épaisseur est typiquement de l'ordre de 60 à 100 pm. Les résultats obtenus sur appareils électriques avec des dépôts en couches minces de l'ordre de 60 à 100 $\mu$m d'épaisseur en Nuflon™ (permittivité relative de 2,7) ou en parylène N (permittivité relative de 2,65) déposés sur des électrodes montrent des facteurs d'amélioration de la tenue diélectrique de l'ordre de 8% par rapport à une électrode non revêtue.

Dans le cadre de la présente invention, l'appareil électrique en partie schématisé à la Figure 6 présente une enceinte métallique (22) et un isolateur (21) et des composants électriques comprenant un conducteur (20) et des électrodes (24). Dans cet appareil électrique, l'isolation hybride est constituée par une isolation gazeuse consistant en un mélange gazeux sous pression (23) d'heptafluoroisobutyronitrile, de $CO_2$ et d'$O_2$ tels que précédemment définis et par une isolation solide se présentant sous forme d'une couche diélectrique épaisse (25) ou d'une couche diélectrique mince (26) telles que précédemment définies.

La combinaison des deux technologies en une isolation hybride, comprenant une isolation gazeuse de type $CO_2$/i-$C_3F_7CN$/$O_2$ et notamment $O_2$ à 4%v et une isolation solide sous forme de couche épaisse aux endroits de facteur d'utilisation du champ faible et de couches minces aux endroits de facteurs de renforcement de champ fort, permet d'obtenir une isolation totale équivalente à celle du $SF_6$ sans augmentation significative de pression et sans modification de la température minimale d'utilisation.

**RÉFÉRENCES**

**[1]** Demande de brevet européen, au nom de Mitsubishi Denki Kabushi Kaisha, publiée sous le n° 0 131 922 le 23 janvier 1985.

**[2]** Brevet US 4 547 316, au nom de Mitsubishi Denki Kabushi Kaisha, publié le 15 octobre 1985.

**[3]** Demande internationale WO 2008/073790, au nom de Honeywell International Inc., publié le 19 juin 2008.

**[4]** Demande internationale WO 2012/080246, au nom de ABB Technology AG., publié le 21 juin 2012.

**[5]** Demande de brevet européen, au nom de Mitsubishi Denki Kabushi Kaisha, publiée sous le n° 1 724 802 le 22 novembre 2006.

**Revendications**

1. Appareil électrique moyenne ou haute tension comprenant une enceinte étanche dans laquelle se trouvent des composants électriques et un mélange gazeux assurant l'isolation électrique et/ou l'extinction des arcs électriques susceptibles de se produire dans cette enceinte, le mélange gazeux comprenant de l'heptafluoroisobutyronitrile, du dioxyde de carbone et de l'oxygène,

l'oxygène étant présent dans ledit milieu gazeux en un pourcentage molaire compris entre 1 et 25%.

2. Appareil électrique selon la revendication 1, **caractérisé en ce que** l'oxygène est présent dans ledit mélange gazeux en un pourcentage molaire compris entre 2 et 15% et, en particulier, entre 2 et 10%.

3. Appareil électrique selon la revendication 1 ou 2, **caractérisé en ce que** ledit heptafluoroisobutyronitrile est présent dans ledit mélange gazeux en un pourcentage molaire ($M_{he}$) qui est au moins égal à 80% du pourcentage molaire M, déterminé par la formule (II) :

$$M = (P_{he}/P_{mélange}) \times 100 \quad (II)$$

dans laquelle $P_{mélange}$ représente la pression totale du mélange à 20°C dans l'appareil électrique et $P_{he}$ représente la pression partielle, exprimée dans la même unité, qui équivaut à 20°C à la pression de vapeur saturante que présente l'heptafluoroisobutyronitrile tel que précédemment défini à la température minimale d'utilisation de l'appareil électrique.

4. Appareil électrique selon l'une quelconque des revendications 1 à 3, **caractérisé en ce que** ledit heptafluoroisobutyronitrile est présent dans ledit mélange gazeux en un pourcentage molaire ($M_{he}$) qui est compris entre 95% et 130%, mieux encore entre 97% et 120%, idéalement entre 99% et 110% du pourcentage molaire M tel que défini à la revendication 3, ledit appareil électrique étant un appareil moyenne tension ou haute tension pour lequel la présence partielle du mélange à l'état liquide n'est pas de nature à réduire l'isolation.

5. Appareil électrique selon l'une quelconque des revendications 1 à 3, **caractérisé en ce que** ledit heptafluoroisobutyronitrile est présent dans ledit mélange gazeux en un pourcentage molaire ($M_{he}$) qui est compris entre 95% et 100% et, en particulier, entre 98% et 100% du pourcentage molaire M tel que défini à la revendication 3, ledit appareil électrique étant un appareil moyenne tension ou haute tension dans lequel l'isolation peut être affectée par la présence de phase liquide.

6. Appareil électrique selon l'une quelconque des revendications 1 à 5, **caractérisé en ce que**, dans ladite enceinte étanche, se trouvent des composants électriques recouverts d'une couche diélectrique solide d'épaisseur variable.

7. Appareil électrique selon la revendication 6, **caractérisé en ce que**, l'épaisseur de ladite couche diélectrique solide étant fonction du facteur d'utilisation du champ électrique, $\eta$, défini comme le rapport du champ électrique moyen (U/d) sur le champ électrique maximal, Emax ($\eta$ = U/(Emax*d)), ladite couche diélectrique solide est une couche épaisse présentant une épaisseur supérieure à 1 mm et inférieure à 10 mm pour des facteurs d'utilisation compris entre 0,2 et 0,4.

8. Appareil électrique selon la revendication 7, **caractérisé en ce que** le (ou les) matériau(x) sélectionné(s) pour réaliser ladite couche diélectrique solide épaisse présente(nt une permittivité relative inférieure ou égale à 6.

9. Appareil électrique selon la revendication 7, **caractérisé en ce que** le (ou les) matériau(x) sélectionné(s) pour réaliser ladite couche diélectrique solide épaisse présente(nt) une permittivité relative inférieure ou égale à 4 et notamment inférieure ou égale à 3.

10. Appareil électrique selon la revendication 8 ou 9, caractérisé en ce ledit (ou lesdits) matériau(x) est(sont) choisi(s) parmi le polytétrafluoroéthylène, le polyimide, le polyéthylène, le polypropylène, le polystyrène, le polycarbonate, le polyméthyl méthacrylate, le polysulfone, le polyetherimide, le polyether ether cétone, le parylène N™, le Nuflon™, le silicone et la résine époxyde.

11. Appareil électrique selon la revendication 6, **caractérisé en ce que**, l'épaisseur de ladite couche diélectrique solide étant fonction du facteur d'utilisation du champ électrique, $\eta$, défini comme le rapport du champ électrique moyen (U/d) sur le champ électrique maximal, Emax ($\eta$ = U/(Emax*d)), ladite couche diélectrique solide est une couche mince présentant une épaisseur inférieure à 1 mm, avantageusement inférieure à 500 $\mu$m, notamment comprise entre 60 et 100 $\mu$m pour des facteurs d'utilisation supérieurs à 0,5 et notamment supérieurs à 0,6.

12. Appareil électrique selon la revendication 11, **caractérisé en ce que** le (ou les) matériau(x) sélectionné(s) pour réaliser ladite couche diélectrique solide mince présente(nt) une permittivité relative comprise entre 2 et 4 et notamment entre 2,5 et 3,5.

13. Appareil électrique selon la revendication 11 ou 12, **caractérisé en ce que** ledit (ou lesdits) matériau(x) est(sont) choisi(s) parmi le polytétrafluoroéthylène, le polyimide, le polyéthylène, le polypropylène, le polystyrène, le polyamide, l'Ethylène Monochlorotrifluoroéthylène le parylène N™, le Nuflon™, le HALAR™ et le HALAR C™.

14. Appareil électrique selon l'une quelconque des revendications précédentes, **caractérisé en ce que** ledit appareil est un transformateur électrique à isolation gazeuse, une ligne à isolation gazeuse pour le transport ou la distribution de l'électricité, un élément de raccordement aux autres équipements du réseau ou un appareil électrique de connexion/déconnexion.

15. Utilisation d'un mélange gazeux comprenant de l'heptafluoroisobutyronitrile, du dioxyde de carbone et de l'oxygène tel que défini dans l'une quelconque des revendications 1 à 5, dans un appareil électrique moyenne ou haute tension dont les composants électriques sont éventuellement recouverts d'une couche isolante solide d'épaisseur variable telle que précédemment définie à l'une quelconque des revendications 6 à 14, comme gaz d'isolation électrique et/ou d'extinction des arcs électriques.

**Patentansprüche**

1. Elektrische Mittel- oder Hochspannungsvorrichtung, umfassend eine dichte Hülle, in der sich elektrische Komponenten und ein Gasgemisch befinden, das die elektrische Isolierung und/oder das Löschen von Lichtbögen sicherstellt, die in dieser Hülle entstehen können, wobei das Gasgemisch Heptafluorisobutyronitril, Kohlendioxid und Sauerstoff umfasst,
wobei der Sauerstoff in dem gasförmigen Medium in einem Molprozentsatz zwischen 1 und 25 % vorhanden ist.

2. Elektrische Vorrichtung nach Anspruch 1, **dadurch gekennzeichnet, dass** der Sauerstoff in dem Gasgemisch in einem Molprozentsatz zwischen 2 und 15 %, insbesondere zwischen 2 und 10 %, vorhanden ist.

3. Elektrische Vorrichtung nach Anspruch 1 oder 2, **dadurch gekennzeichnet, dass** das Heptafluorisobutyronitril in dem Gasgemisch in einem Molprozentsatz ($M_{He}$) vorhanden ist, der mindestens gleich 80 % des Molprozentsatzes M ist, bestimmt durch die Formel (II):

$$M = (P_{He}/P_{Gemisch}) \times 100 \text{ (II)},$$

wobei $P_{Gemisch}$ den Gesamtdruck des Gemisches bei 20°C in der elektrischen Vorrichtung darstellt, und $P_{He}$ den Partialdruck, ausgedrückt in derselben Einheit, darstellt, der äquivalent ist zu 20°C beim Sättigungsdampfdruck, den Heptafluorisobutyronitril, wie vorstehend definiert, bei der minimalen Verwendungstemperatur der elektrischen Vorrichtung aufweist.

4. Elektrische Vorrichtung nach einem der Ansprüche 1 bis 3, **dadurch gekennzeichnet, dass** das Heptafluorisobutyronitril in dem Gasgemisch in einem Molprozentsatz ($M_{He}$) vorhanden ist, der zwischen 95 % und 130 %, noch besser zwischen 97 % und 120 %, idealerweise zwischen 99 % und 110 %, des Molprozentsatzes M, wie in Anspruch 3 definiert, beträgt, wobei die elektrische Vorrichtung eine Mittelspannungs- oder Hochspannungsvorrichtung ist, für die das teilweise Vorliegen des Gemisches im flüssigen Zustand nicht dazu führt, dass die Isolierung reduziert wird.

5. Elektrische Vorrichtung nach einem der Ansprüche 1 bis 3, **dadurch gekennzeichnet, dass** das Heptafluorisobutyronitril in dem Gasgemisch in einem Molprozentsatz ($M_{He}$) vorhanden ist, der zwischen 95 % und 100 %, und insbesondere zwischen 98 % und 100 %, des Molprozentsatzes M, wie in Anspruch 3 definiert, beträgt, wobei die elektrische Vorrichtung eine Mittelspannungs- oder Hochspannungsvorrichtung ist, bei der die Isolierung durch das Vorliegen der Flüssigphase beeinflusst werden kann.

6. Elektrische Vorrichtung nach einem der Ansprüche 1 bis 5, **dadurch gekennzeichnet, dass** sich in der dichten Hülle elektrische Komponenten befinden, die mit einer festen dielektrischen Schicht mit variabler Dicke bedeckt sind.

7. Elektrische Vorrichtung nach Anspruch 6, **dadurch gekennzeichnet, dass** die Dicke der festen dielektrischen Schicht eine Funktion des Nutzungsfaktors des elektrischen Felds, $\eta$, definiert als Verhältnis des mittleren elektrischen Felds (U/d) zum maximalen elektrischen Feld, Emax ($\eta$ = U/Emax*d), ist, wobei die feste dielektrische Schicht eine dicke Schicht mit einer Dicke von mehr als 1 mm und weniger als 10 mm für Nutzungsfaktoren zwischen 0,2 und 0,4 ist.

8. Elektrische Vorrichtung nach Anspruch 7, **dadurch gekennzeichnet, dass** das (oder die) Material(ien), das (die) ausgewählt wird (werden), um die dicke feste dielektrische Schicht zu bilden, eine relative Permittivität von kleiner oder gleich 6 aufweist (aufweisen).

9. Elektrische Vorrichtung nach Anspruch 7, **dadurch gekennzeichnet, dass** das (oder die) Material(ien), das (die) ausgewählt wird (werden), um die dicke feste dielektrische Schicht zu bilden, eine relative Permittivität von kleiner oder gleich 4 und insbesondere kleiner oder gleich 3 aufweist (aufweisen).

10. Elektrische Vorrichtung nach Anspruch 8 oder 9, **dadurch gekennzeichnet, dass** das (oder die) Material(ien) ausgewählt ist (sind) aus Polytetrafluorethylen, Polyimid, Polyethylen, Polypropylen, Polystyrol, Polycarbonat, Polymethylmethacrylat, Polysulfon, Polyetherimid, Polyetheretherketon, Parylen N™, Nuflon™, Silikon und Epoxidharz.

11. Elektrische Vorrichtung nach Anspruch 6, **dadurch gekennzeichnet, dass** die Dicke der festen dielektrischen Schicht eine Funktion des Nutzungsfaktors des elektrischen Felds, $\eta$, definiert als Verhältnis des mittleren elektrischen Felds (U/d) zum maximalen elektrischen Feld, Emax ($\eta$ = U/Emax*d), ist, wobei die feste dielektrische Schicht eine dünne Schicht mit einer Dicke von weniger als 1 mm, vorteilhaft weniger als 500 $\mu$m, insbesondere zwischen 60 und 100 $\mu$m, für Nutzungsfaktoren von mehr als 0,5 und insbesondere mehr als 0,6 ist.

12. Elektrische Vorrichtung nach Anspruch 11, **dadurch gekennzeichnet, dass** das (oder die) Material(ien), das (die) ausgewählt wird (werden), um die dünne feste dielektrische Schicht zu bilden, eine relative Permittivität zwischen 2 und 4 und insbesondere zwischen 2,5 und 3,5 aufweist (aufweisen).

13. Elektrische Vorrichtung nach Anspruch 11 oder 12, **dadurch gekennzeichnet, dass** das (oder die) Material(ien) ausgewählt ist (sind) aus Polytetrafluorethylen, Polyimid, Polyethylen, Polypropylen, Polystyrol, Polyamid, Ethylenmonochlortrifluorethylen, Parylen N™, Nuflon™, HALAR™ und HALAR C™.

14. Elektrische Vorrichtung nach einem der vorhergehenden Ansprüche, **dadurch gekennzeichnet, dass** die Vorrichtung ein elektrischer Transformator mit Gasisolierung, eine Leitung mit Gasisolierung für den Transport oder die Verteilung von Elektrizität, ein Anschlusselement für andere Ausrüstungen des Netzes oder eine elektrische Vorrichtung zur Verbindung/Trennung ist.

15. Verwendung eines Gasgemisches, umfassend Heptafluorisobutyronitril, Kohlendioxid und Sauerstoff, wie in einem der Ansprüche 1 bis 5 definiert, in einer elektrischen Mittel- oder Hochspannungsvorrichtung, deren Komponenten gegebenenfalls mit einer festen Isolierschicht mit variabler Dicke, wie vorstehend in einem der Ansprüche 6 bis 14 definiert, bedeckt sind, als Gas für eine elektrische Isolierung und/oder ein Löschen von Lichtbögen.

## Claims

1. Medium- or high-voltage electrical apparatus comprising a leaktight compartment in which there are electrical components and a gas mixture that ensures electrical insulation and/or extinguishing of the electrical arcs capable of being produced in this compartment, the gas mixture comprising heptafluoroisobutyronitrile, carbon dioxide and oxygen,
oxygen being present in the said gaseous medium in a molar percentage of between 1 and 25%.

2. Electrical apparatus according to claim 1, **characterised in that** oxygen is present in the said gas mixture in a molar percentage of between 2 and 15%, in particular between 2 and 10%.

3. Electrical apparatus according to claim 1 or 2, **characterised in that** the said heptafluoroisobutyronitrile is present in the said gas mixture in a molar percentage ($M_{he}$) that is at least equal to 80% of the molar percentage M determined by formula (II):

$$M = (P_{he}/P_{mixture}) \times 100 \quad (II)$$

where $P_{mixture}$ represents the total pressure of the mixture at 20°C in the electrical apparatus and $P_{he}$ represents the partial pressure, expressed in the same units, which is equivalent at 20°C to the saturated vapour pressure that heptafluoroisobutyronitrile has as described above at the minimum working temperature of the electrical apparatus.

4. Electrical apparatus according to any one of claims 1 to 3, **characterised in that** the said heptafluoroisobutyronitrile is present in the said gas mixture in a molar percentage ($M_{he}$) that is between 95% and 130%, more preferably between 97% and 120%, ideally between 99% and 110%, of the molar percentage M as defined in claim 3, the said electrical apparatus being a medium-voltage or high-voltage apparatus for which partial presence of the mixture in the liquid state is not capable of reducing the insulation.

5. Electrical apparatus according to any one of claims 1 to 3, **characterised in that** the said heptafluoroisobutyronitrile is present in the said gas mixture in a molar percentage ($M_{he}$) that is between 95% and 100%, and in particular between 98% and 100%, of the molar percentage M as defined in claim 3, the said electrical apparatus being a medium-voltage or high-voltage apparatus in which the insulation may be affected by the presence of a liquid phase.

6. Electrical apparatus according to any one of claims 1 to 5, **characterised in that** electrical components covered with a solid dielectric layer of variable thickness are contained in the said leaktight compartment.

7. Electrical apparatus according to claim 6, **characterised in that**, the thickness of the said solid dielectric layer being a function of the utilisation factor of the electrical field, $\eta$, defined as the ratio of the mean electric field (U/d) to the maximum electric field Emax ($\eta = U/(Emax*d)$), the solid dielectric layer is a thick layer having a thickness of more than 1 mm and less than 10 mm for utilisation factors of between 0.2 and 0.4.

8. Electrical apparatus according to claim 7, **characterised in that** the material(s) selected for forming the said solid dielectric layer has (have) a relative permittivity of less than or equal to 6.

9. Electrical apparatus according to claim 7, **characterised in that** the material(s) selected for forming the said solid dielectric layer has (have) a relative permittivity of less than or equal to 4, and in particular less than or equal to 3.

10. Electrical apparatus according to claim 8 or 9, **characterised in that** the said material(s) is (are) selected from polytetrafluoroethylene, polyimide, polyethylene, polypropylene, polystyrene, polycarbonate, polymethyl methacrylate, polysulfone, polyetherimide, polyether ether ketone, Parylene N™, Nuflon™, silicone and epoxy resin.

11. Electrical apparatus according to claim 6, **characterised in in that**, the thickness of the said solid dielectric layer being a function of the utilisation factor of the electrical field, $\eta$, defined as the ratio of the mean electric field (U/d) to the maximum electric field Emax ($\eta = U/(Emax*d)$), the solid dielectric layer is a thin layer having a thickness of less than 1 mm, advantageously less than 500 $\mu$m, in particular between 60 and 100 $\mu$m, for utilisation factors of more than 0.5, and in particular more than 0.6.

12. Electrical apparatus according to claim 11, **characterised in that** the material(s) selected for forming the said solid dielectric layer has (have) a relative permittivity of between 2 and 4, and in particular between 2.5 and 3.5.

13. Electrical apparatus according to claim 11 or 12, **characterised in that** the said material(s) is (are) selected from polytetrafluoroethylene, polyimide, polyethylene, polypropylene, polystyrene, polyamide, Ethylene Monochlorotrifluoroethylene Parylene N™, Nuflon™, HALAR™ and HALAR C™.

14. Electrical apparatus according to any one of the preceding claims, **characterised in that** the said electrical apparatus is an electrical transformer with gas insulation, a line with gas insulation for carrying or distributing electricity, an element for connection to other equipment items of the network, or an electrical apparatus for connection/disconnection.

15. Use of a gas mixture comprising heptafluoroisobutyronitrile, carbon dioxide and oxygen, as defined in any one of claims 1 to 5, in a medium- or high-voltage electrical apparatus whose electrical components are optionally covered with a solid insulating layer of variable thickness, as defined above in any one of claims 6 to 14, as a gas for electrical insulation and/or extinguishing of electrical arcs.

FIG.1

FIG.2

EP 3 047 491 B1

FIG.3

FIG.4

**FIG.5**

**FIG.6**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4547316 A
- WO 2008073790 A
- WO 2012080246 A
- WO 2013041697 A
- FR 1265731

- EP 0131922 A, Mitsubishi Denki Kabushi Kaisha
- EP 1724802 A, Mitsubishi Denki Kabushi Kaisha